# EUROPEAN PATENT APPLICATION

(11) **EP 1 074 912 A1**
(43) Date of publication of application: **07.02.2001**
(21) Application number: 00306638.8
(22) Date of filing: 04.08.2000
(51) Int. Cl.: G06F 9/44

(54) **Geometry pipeline for computer graphics**

(30) Priority: 06.08.1999 GB 9918643
(71) Applicant: CANON KABUSHIKI KAISHA, Tokyo (JP)
(72) Inventor: Meldrum, Simon David, Ipswich, Suffolk IP1 3QF (GB); Dunnett, Graham John, Critetion Software Limited, Guilford, Surrey GU2 5AZ (GB); Bleasdale-Shepherd, Iestyn, Critetion Softw. Ltd., Guilford, Surrey GU2 5AZ (GB)
(74) Representative: Beresford, Keith Denis Lewis

(57) **Abstract**

A facility for developing a computer program for, among other things, processing graphical data includes a facility for importing or defining individual functional elements (A to J) of a graphical pipeline (200, 202), and for defining configurations of graphical pipelines. The facility includes means for storing and registering functional elements and for storing predetermined configurations to be used as graphical pipelines.

Further, objects to be displayed graphically can be delivered to the facility whereby each object is assigned a particular pipeline for processing.

The facility also allows the validity of a defined pipeline to be checked by means of a topology sorter.

## Description

This invention relates to computer graphics apparatus, and specifically to apparatus for processing data defining computer graphics geometry by means of a pipeline.

Computer apparatus configured to generate three dimensional graphical images usually comprises a plurality of processing stages which are concatenated to form a pipeline. These processing stages are hereinafter referred to as nodes. This pipeline is operable to receive packets of information defining the geometrical arrangement of objects within a scene to be displayed. Packets are processed in turn by the nodes of the pipeline until the information is in a form suitable to be submitted to a rasteriser capable of producing a rasterised image for display on a visual display unit.

Typical nodes for inclusion in the pipeline include a node to transform geometry data from an object centric coordinate set (so-called object space) to a globally centric coordinate set (so-called world space), a node to calculate lighting values for objects to be displayed, and nodes to cull back faces of objects and to clip invisible or obscured parts of polygons constructing objects to be displayed.

Previously, a geometry data processing pipeline has been provided in its entirety in a 3D graphics management unit, which pipeline must be used by a content software developer in the development of three dimensional graphical images. Very few functions are exposed to the developer to accommodate a need for amendment to the form or content of the pipeline.

It is an object of the invention to provide a framework which will allow a content software developer developing an application a facility to create a pipeline to suit the specific application.

A first aspect of the invention provides computer apparatus for software development, comprising means for storing a plurality of graphical processing means, means for selecting ones of said plurality of graphical processing means, and means for determining an order for execution of said selected ones of said graphical processing means.

A second aspect of the invention comprises a computer graphics apparatus comprising means for generating graphical data for processing, and graphical processing means for processing graphical data, said graphical processing means comprising storage means storing a plurality of pipeline means for pipeline processing of graphical data and pipeline selection means operable to select, for a piece of graphical data, a most suitable one of said pipeline means for processing said piece of graphical data.

Preferably, said generating means is operable to associate, with a piece of graphical data, an indication of a most suitable one of the processing means, and said processing means includes means for identifying said indication and causing said selection means to select accordingly.

A third aspect of the invention provides means for managing a pipeline processing graphical data, including means for identifying excessive volume of data in said pipeline and means for creating further pipelines in the event of excessive volume of data.

Further aspects and advantages of the invention will be apparent from the following description of specific embodiments of the invention, with reference to the accompanying drawings in which:
Figure 1 is a schematic diagram of computer apparatus configured for development of content software;
Figure 2 is a schematic diagram of a graphics manager development unit of the apparatus of Figure 1;
Figure 3 is a schematic diagram of a graphics pipeline manager unit of the development unit illustrated in Figure 2;
Figure 4 is a schematic diagram of computer apparatus configured for the playing of a game defined by content software developed on the apparatus of Figure 1;
Figure 5 is a schematic diagram of a graphics manager of the apparatus illustrated in Figure 4;
Figure 6 is a flow diagram illustrating a method of processing graphics data using pipelines defined in accordance with the invention;
Figure 7 is a flow diagram showing in further detail the "execute pipelines" step of the flow diagram illustrated in Figure 6;
Figure 8 is a flow diagram illustrating in further detail the "batch packets" step of the flow diagram illustrated in Figure 7;
Figure 9 is a schematic diagram showing a first pipeline defined in accordance with the specific embodiment of the invention;
Figure 10 shows a second pipeline defined in accordance with a specific embodiment of the invention;
Figure 11 shows a dependency propagation diagram corresponding to the first pipeline illustrated in Figure 9;
Figure 12 shows a flow diagram illustrating a method of topology sorting to be applied to pipelines defined in accordance with the specific embodiment of the invention;
Figure 13 is a diagram showing the first pipeline sorted in accordance with the topology sorting method illustrated in Figure 12;
Figure 14 is a diagram showing the second pipeline sorted in accordance with the topology sorting method illustrated in Figure 12;
Figure 15 is a diagram showing execution of the second pipeline with respect to two packets of data in accordance with the method illustrated in Figure 7;
Figure 16 shows an alternative method of pipeline execution in accordance with the specific embodiment of the invention as applied to a first packet of the information; and
Figure 17 shows an alternative method of pipeline execution in accordance with the specific embodiment of the invention as applied to a second packet of the information.

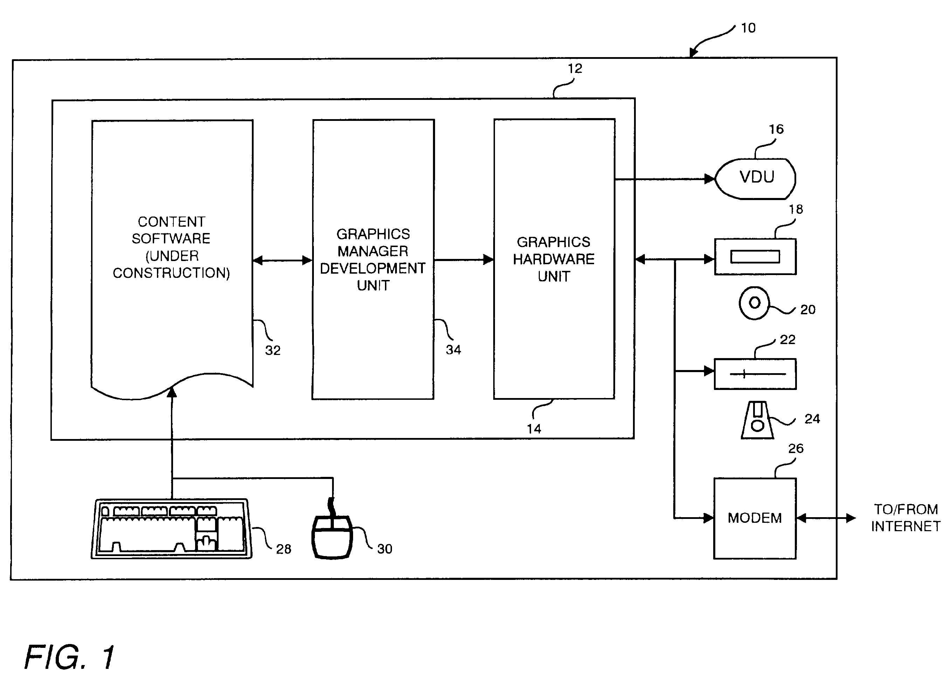

Figure 1 shows a content software development apparatus 10 configured in accordance with a first specific embodiment of the invention. The apparatus 10 comprises a computer 12 which, although illustrated schematically in terms of its function, comprises a central processing unit (CPU) and memory including read only memory (ROM) and random access memory (RAM). The computer 12 also includes, in terms of hardware, a graphics hardware unit 14. This is hardware specifically designed for the processing of graphics data, received as a series of geometry data, which can then be converted into rasterised data. The computer further comprises a visual display unit (VDU) 16, to which rasterised data generated by the graphics hardware unit is output, in use. Further, an optical disk drive 18, for receiving an optical disk 20, is connected to the computer 12. A magnetic disk drive 22, for receiving a magnetic disk 24 is also provided, as is a modem 26 for communication with the Internet.

Input devices, namely a keyboard 28 and a mouse 30, are provided, to send input signals to the computer 12 in the event of user input actions.

The computer 12 is configured by means of software to offer a software developer a facility to create source code. This may be in the form of a text editor, to create a text file containing source code. The source code can then be compiled using a compiler. The source code being created is illustrated as content software (under construction) 32 in Figure 1.

The content software 32 makes reference to a graphics manager development unit 34. The graphics manager development unit 34 comprises a means by which software for the management and processing of graphical data into a form suitable for submission to the graphics hardware unit 14 can be linked with the content software. For this purpose, a number of functions for the control of graphical data are exposed for use by the content software developer in the content software 32. When a function exposed by the graphics manager development unit 34 is inserted in the content software 32, this function will, in the resultant compiled code, call a section of the code defining the graphics manager development unit 34 to perform a processing task and/or handle data sent to the graphics manager development unit 34 by the content software 32. This might also result in data being sent from the graphics manager development unit 34 to the graphics hardware unit 14, for processing and possible updating of a rasterised image displayed on the VDU 16.

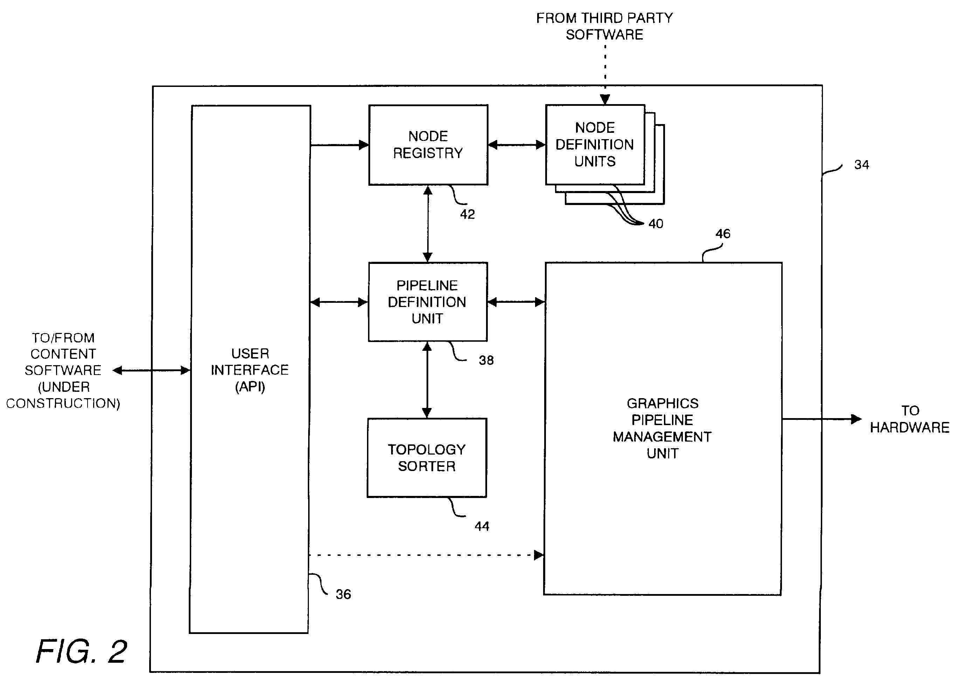

As shown in Figure 2, the set of functions exposed by the graphics manager development unit 34 is contained in a user interface (application program interface - API) 36.

Among other things, the graphics manager development unit 34 offers the content software developer the facility to define a graphics pipeline. In order to provide efficient graphics processing, the described embodiment provides a facility for assigning to a specific graphical object a pipeline for its most efficient processing. For example, an object which does not include a glossy surface may be processed by a pipeline which does not include a node for processing glossy surfaces. This would improve the efficiency of the processing of the object through to a form in which it can be submitted for rasterisation in the hardware 14.

Each graphical object in the present embodiment includes an attribute defining a material from which the object is considered to be constructed. A material consists of a collection of attributes, including those defining reflectivity, colour, ambient lighting etc. for the material, and also includes pointers to texture maps etc. The material also includes a pointer to a specific pipeline for the rendering of an object defined as being of that material. It is advantageous to place the pipeline pointer on the material, because it is the material which contains most of the attributes which affect the required level of complexity of pipeline processing.

The user interface (API) 36 provides a facility for defining pipelines, which are stored in a pipeline definition unit 38 of the graphics manager development unit 34. The graphics manager development unit 34 is supplied with a selection of generally useful pipelines defined in pre-programmed form in the pipeline definition unit 38. More specialised pipelines could be defined by a user using functions exposed in the user interface (API) 36, if more specialised pipelines are required by a specific content software 32.

Pipelines are defined by means of a series of nodes, which are connected in such a way that pipeline progression through the connected nodes can be achieved. A selection of nodes are defined in a plurality of node definition units 40, provided by the graphics manager development unit 34. These node definition units 40, together with any further node definition units introduced by the content software 32 or by means of third party software, are registered in a node registry 42. It is useful to provide a node registry 42, since this will allow reference by the pipeline definition units 38 to specific ones of the node definition units 40. When nodes are developed, they are first provided with identification numbers (node IDs). A node ID is unique to that specific node. Accordingly, by use of node IDs, the node registry 42 can track uniquely the node definition units 40.

A topology sorter 44 is provided, which refers to the pipeline definition unit 38, to ensure that the defined pipelines are valid. A valid pipeline is one which can be processed sequentially, without any cycles. The topology sorter 44 sorts the nodes of a pipeline defined in the pipeline definition unit 38 into an order in which the nodes can be executed such that, when a node is executed, all of its predecessors in the pipeline have already been executed.

A topology sorter 44 is useful in conjunction with the pre-compiled content software 32, to check that the nodes of the user-defined pipelines can be placed in a topologically sorted order. The topology sorter 44 returns the topologically sorted nodes to the pipeline definition unit 38, and the topologically sorted order will be used during execution of the pipeline in use of the compiled content software.

Finally, the graphics manager development unit 34 provides a graphics pipeline management unit 46 which will, in use of the compiled content software 32, provide all of the processing requirements, with reference to the pipeline definition unit 38, for processing of graphics data passed to it from the content software 32. The graphics pipeline management unit 46 will output graphics data to the graphics hardware unit 14 for the creation of rasterised data.

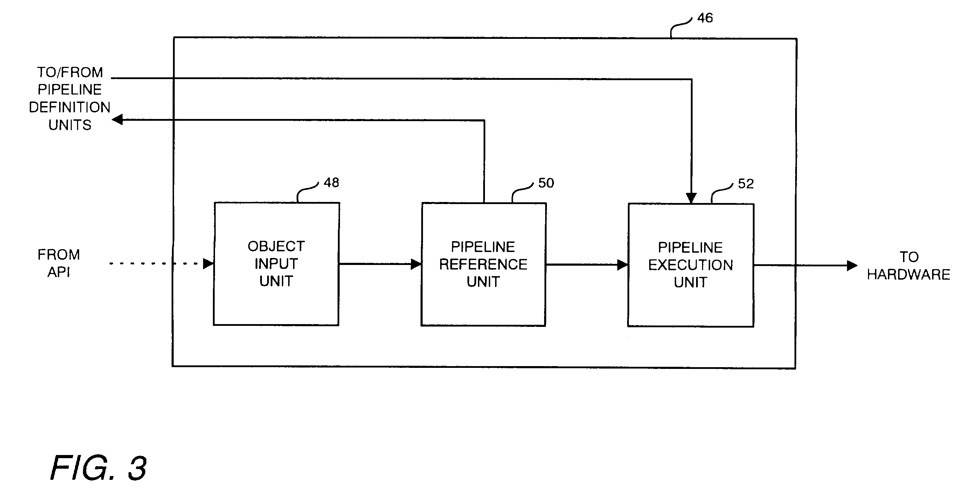

As can be seen in Figure 3, the graphics pipeline management unit 46 receives instructions from the content software 32 via the user interface (API) 36, including graphics data. That graphics data includes reference to a specific pipeline to be used with the graphics data. This reference comprises a pipeline pointer in the material attributes associated with the graphics data. The pipeline pointer is identified in an object input unit 48. The pipeline pointer is passed to a pipeline reference unit 50, which refers to the appropriate pipeline definition held in the pipeline definition unit 38. The pipeline definition unit 38 returns the pipeline definition, including reference to the appropriate node definition units 40 for that pipeline definition unit 38. An instance of the pipeline is then constructed in a pipeline execution unit 52, which processes the graphical data to which that pipeline pertains. Thereafter, the resultant data on which the pipeline has been executed is submitted to the graphics hardware unit 14 for rasterisation.

Therefore, the graphics manager development unit 34 provides the elements of a graphics unit which, on compilation of developed content software, will be associated, or linked, therewith. During compilation, various parts of the graphics manager development unit 34 need not be incorporated into a finished compiled product. However, the finished product can still be considered in terms of content software and a graphics manager.

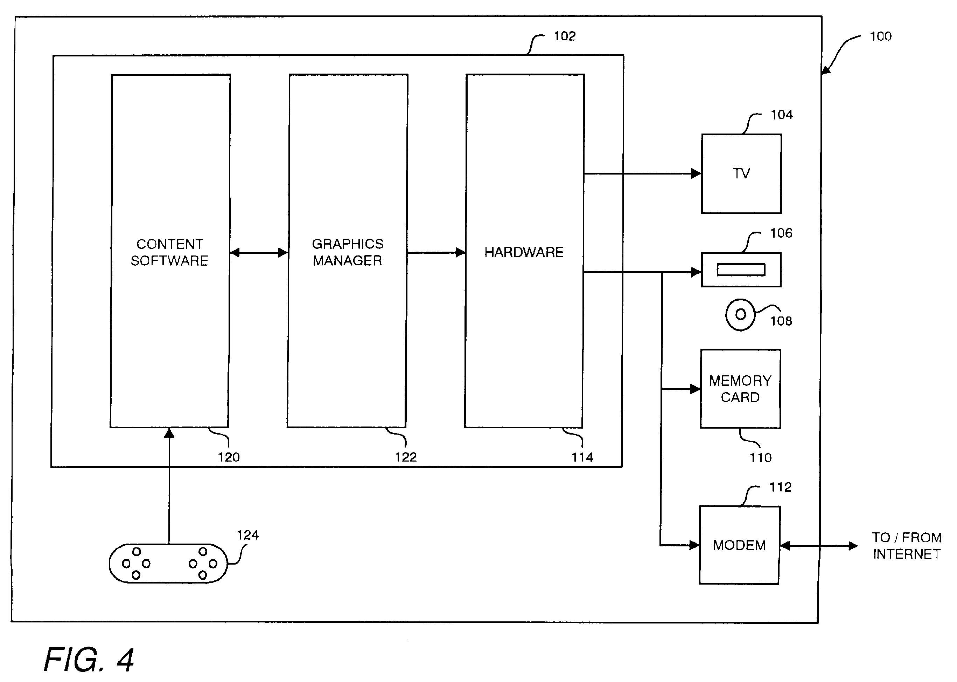

In Figure 4, a home entertainment system 100 is illustrated, which includes a console 102 connected to a television 104. The console has integrated therein, or is connected to, an optical disk drive 106 for receiving an optical disk 108. Further, a memory card 110 may be connected to the console 102 for storage of information thereon and retrieval of the information therefrom. A modem 112 can be provided for access to the Internet.

The console 102 includes processing hardware, which in most cases is significantly more application specific than would be the hardware within a general purpose computer of similar processing power. For example, most consoles 102 are used primarily for the playing of games. Therefore, the graphics capability of the hardware 114 for the console 102 may be enhanced relative to the graphics hardware unit 14 of the development computer 12.

A computer software product, as compiled after development on the development computer 12, is supplied to the home entertainment system 100 on an optical disk 108. By loading the content software into the console 102, the two specific components of the software, namely a content software portion 120 and a graphics manager 122, are implemented. The content software portion 120 is operable to receive input signals from an input keypad 124, and thereby generates corresponding graphical data for processing by the graphics manager 122. The graphics manager 122 comprises parts of the graphics manager development unit 34, which have been compiled.

In order to limit the extent to which the graphics manager contributes to the size of the computer program stored on the optical disk 108, only those parts of the graphics manager development unit 34 actually used by the content software portion 120 are provided. This will be most apparent in the number of node definition units 40, and the content of the pipeline definition unit 38, provided in the final graphics manager 122.

It is possible that not all of the predetermined pipeline definitions in the pipeline definition unit 38, and consequently not all of the node definition units 40, are used by the developer, and therefore referred to by the content software 32 constructed on the development computer 12. Thus, the graphics manager 122 could be provided without those unused node definition units 40 and pipeline definitions. Further functionality of the graphics manager unit 34 may be omitted, such as the topology sorter, whose task is completed when it has returned topologically sorted pipeline execution orders during software development.

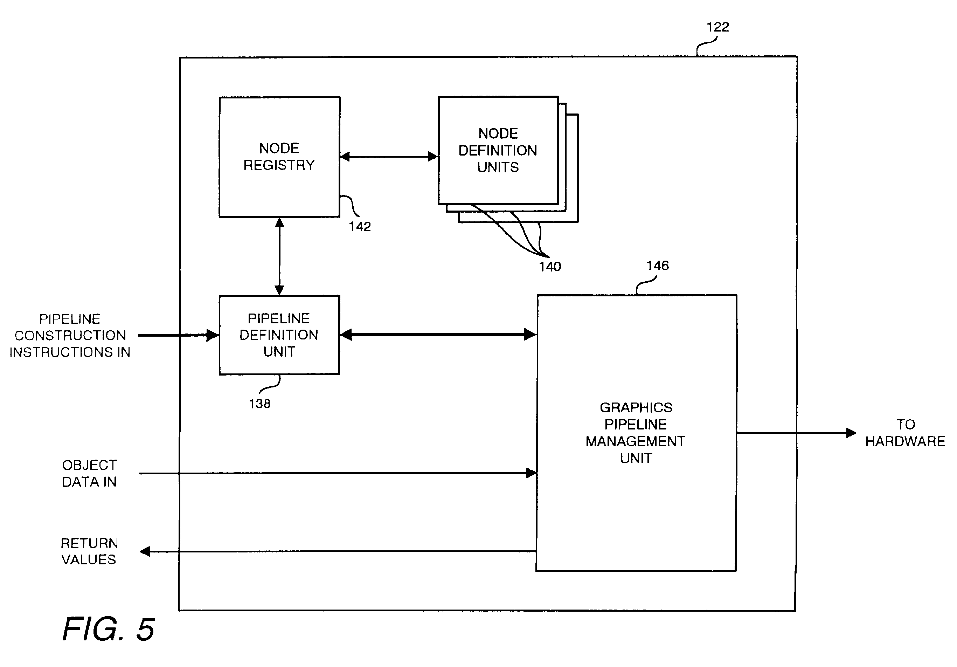

As can be seen from Figure 5, the graphics manager 122 is provided with a refined pipeline definition unit 138, containing appropriate pipeline definitions (in topologically sorted order), and the corresponding selection of node definition units 140 (in compiled form), with a node registry 142. There is no topology sorter 44, because the topology sorting function has been completed in the graphics manager development unit 34. The compiled and finished product supplied on the optical disk 108 will have been tested sufficiently that a topology sorter is not required.

Further, the graphics pipeline management unit 146 comprises the functionality as schematically represented in Figure 3, being capable of receiving objects data from the content software 120, and sending appropriate graphical data to the hardware. Return values are also provided by the graphics pipeline management unit 46 back to the content software so that the content software 120 can be made aware of any changes to global variables.

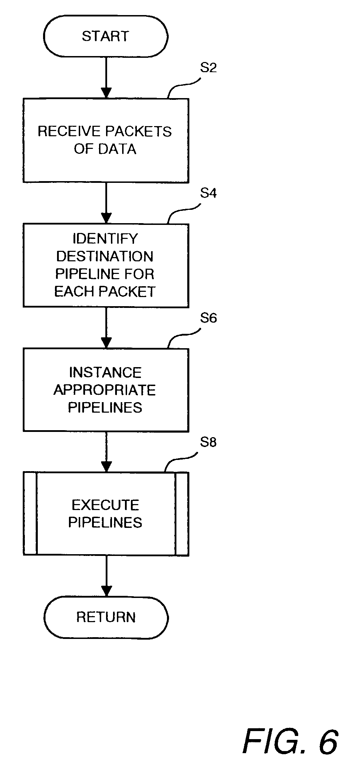

Figure 6 shows a method of operation of the graphics manager 122 in conjunction with the content software 120, to process packets of graphics definition data created by the content software 120, for submission to hardware for rasterisation.

In step S2 of the method illustrated in Figure 6, the object input unit 48 of the graphics pipeline management unit 46 receives packets of data to be processed. These packets represent three dimensional objects in a scene to be graphically represented. Thereafter, in step S4, the packets are passed to the pipeline reference unit 50, which identifies, for each packet, the pipeline which is defined to process the data of that packet, by reference to the pointer in the material object associated with each packet, the material object containing a pointer to a specific pipeline as described above.

Then, in step S6, the pipeline reference unit refers to the pipeline definition unit 138 to find the pipeline definitions corresponding to the pipelines defined for the packets, and instances of those pipelines are set up for execution. Instancing involves defining the nodes of the pipeline, along with input and output queues for each node, on which packets progressing through the pipeline are stored. Instancing follows instructions held in the node definition units 140 for correct arrangement and allocation of memory in preparation for use in storing data associated with a node.

In step S8 the instanced pipelines are executed for the packets. The execution of a pipeline in step S8 involves, at a final step, submission of the data to the hardware 114 for final processing and rasterisation.

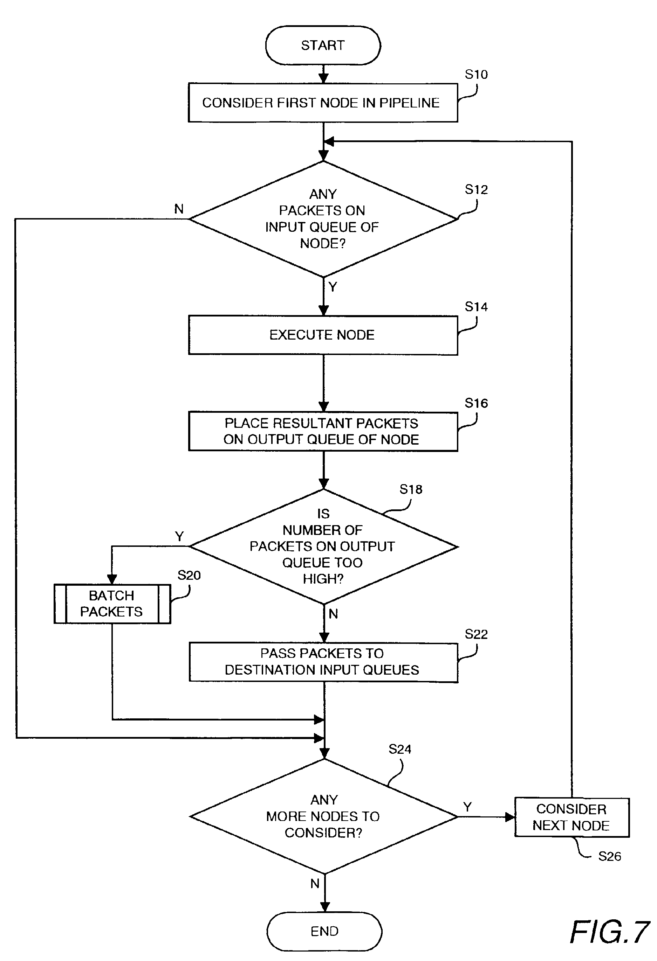

The "execute pipelines" step S8 as illustrated in Figure 6 is performed as many times as pipelines are instanced. Pipelines are executed in parallel. An alternative embodiment could allow pipelines to be executed sequentially. Figure 7 illustrates the execution of one pipeline. In step S10, the initial step is to consider the first node in the pipeline. In step S12, the node under consideration is checked to establish whether its input queue contains any packets for processing. If there are packets on the input queue, then the node is executed in step S14, by application of its associated function to packets of data on its input queue. The packet or packets of data resultant from execution of the node are placed on the output queue of that node, in step S16.

In step S18 a further check is carried out to establish whether the number of packets on that output queue is higher than a given threshold. This threshold can be set internally by the graphics manager 122.

Should the number be higher than the given threshold then, in step S20, a sub-procedure is called which batches the packets. This means that the packets are batched into smaller numbers, and further instances of the pipeline are created for those separate batches. This is advantageous since it limits the effect of data explosion.

Further pipelines are instanced in their entirety, rather than just instancing the remaining nodes necessary for completion of processing, because pipelines can be considered as data objects in their own right. It is easier to instance the whole pipeline than to temporarily construct a fragment of a pipeline in memory as a special case.

Alternatively, should the number of packets on the output queue be lower than the given thresholds, then in step S22 the packets are passed to appropriate destination input queues. The appropriate destination input queues are defined in accordance with the pipeline definition held in the pipeline definition unit 38.

After either step S20 or step S22, or if in step S12 it was found that there were no packets on the input queue of the node under consideration, then in step S24 a check is made in accordance with the instance of the pipeline, as to whether any more nodes remain to be considered. If so, then the next node is placed under consideration and the routine passes back to step S12. If no more nodes remain to be considered, then the routine ends.

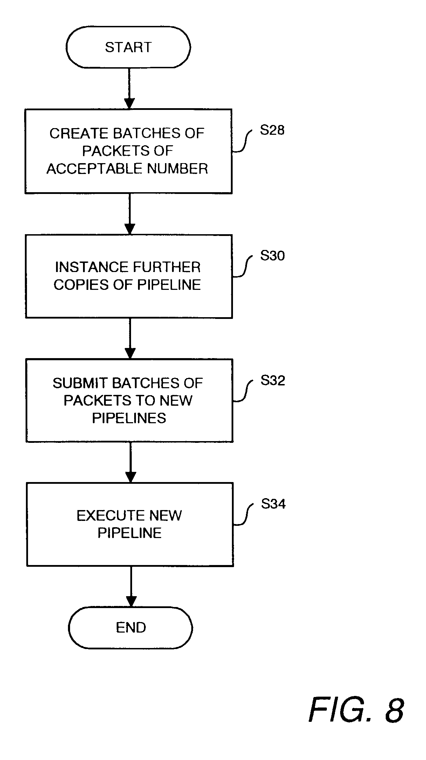

Figure 8 shows the procedure called in step S20 of Figure 7, in which packets of an output queue of a node are batched to account for explosion in data. In step S28, groups of packets of a predetermined acceptable number, below the given threshold, are created. Then, while one of the batches may remain on the pipeline being executed, a respective further instance of that pipeline is then created for each further respective group of packets. Those instances are added to the list of instanced pipelines for execution by the pipeline execution unit 52.

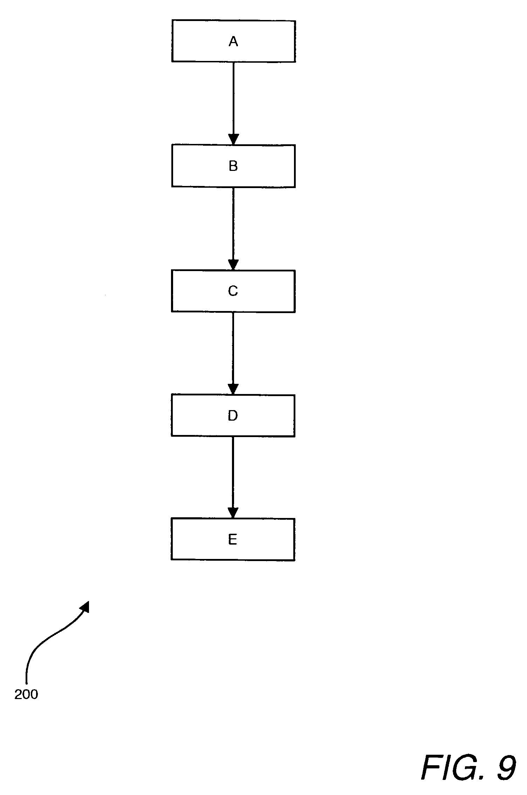

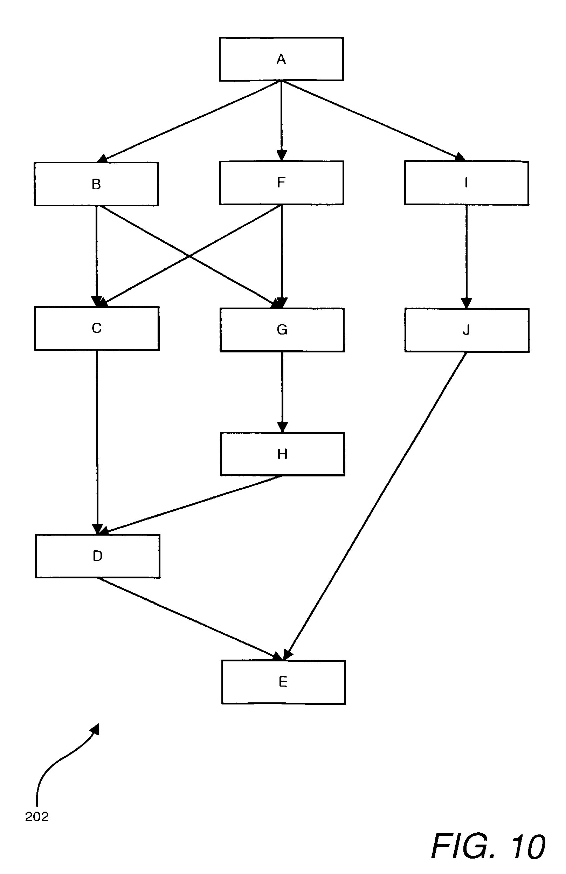

Figures 9 and 10 show pipelines which demonstrate different levels of complexity. A first pipeline 200 is illustrated in Figure 9, which consists of five nodes A to E defined to process packets of data in a linear manner. That is, node A passes data to node B, node B passes data to node C, node C passes data to node D and node D passes data to node E. Node A is a transform node for transforming data from object-centric to global coordinates, node B a lighting value calculation node, node C a culling node, node D a transform node to transform data to take account of a viewing direction and node E is a clipping and submission node.

In contrast, a second pipeline 202 illustrated in Figure 10 is rather more complex. This pipeline includes the structure of the pipeline 200 illustrated in Figure 9, but also includes further nodes F to J. Node A can also pass data to nodes F and I, and node B can also pass data to node G. Further, node F can pass data to nodes C and G, node G can pass data to node H and node H can pass data to node D; node I can pass data to node J and node J can pass data to node E.

In this case, node F is an alternative lighting node, such as one which applies a glossy map over geometry defined in the submitted packets of data, and nodes G and H provides refinement and culling in view of the potentially much higher quantity of graphical data generated by such a glossy map. Nodes I and J may represent an alternative processing task combining the processes of nodes B, C and D, in a manner which might be more appropriate in certain circumstances. The exact nature of each of these nodes could be amended by the content software developer as the need arises.

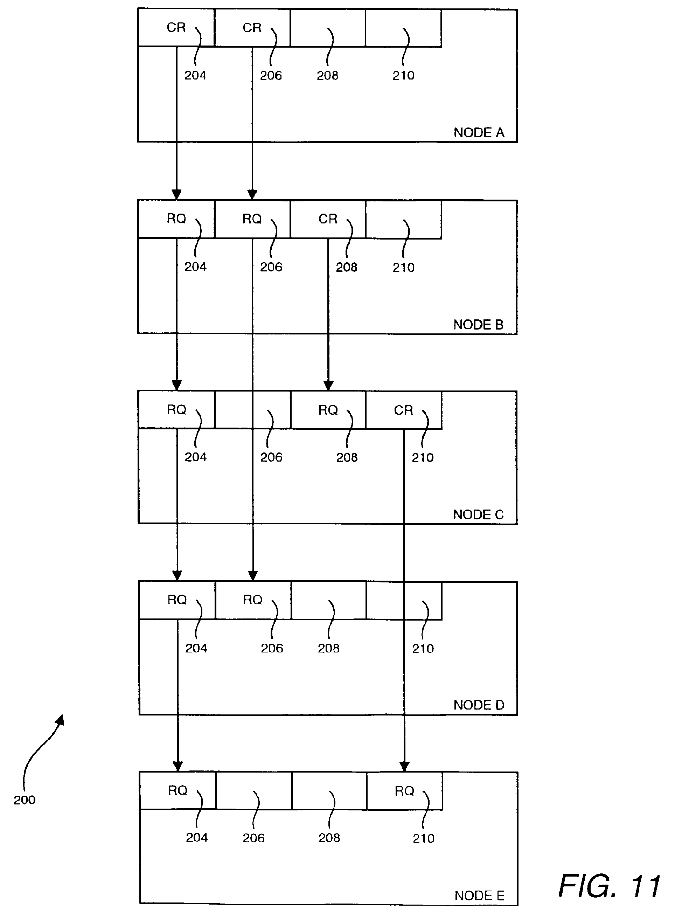

When defining pipelines, it is important to take into account two issues. Firstly, each node will have a required format for the input of data, which must be satisfied by the creation of that input format by an earlier node, or in originally submitted data. This can be checked by dependency propagation, which may be achieved by the user defining the pipeline, or alternatively by the compiler in the original development computer 10. Figure 11 shows the pipeline 200 of Figure 9 in more detail, illustrating the propagation of its input dependencies. Each node receives or creates data on at least one of four illustrated channels 204 to 210.

In node E shown in Figure 11, channels 204 and 210 are marked RQ. This is to signify that this node requires on these channels a packet of data in order to process that packet of data. However, this does not mean that a packet of data when submitted to the pipeline needs to have those channels initialised. For example, node C creates data on channel 210 (signified by the letters CR), and that is the first occasion on which data is present on that channel. Channels 204 and 206 are created in node A, and channel 208 is created in node B.

Accordingly, the pipeline definition unit 38 of the graphics manager development unit 34 is capable, during compilation, of processing back from the end of a pipeline to ensure that all channel requirements (RQ) are satisfied by channel creations (CR) earlier in the pipeline. This is the case in Figure 11, where all downwardly pointing arrows specify the processing of data through the pipeline. Each arrow terminates at the lower end with an arrow head pointing to the channel requirement (RQ), and at the upper end thereof ultimately with a channel creation (CR) in an earlier node.

A second issue concerning the definition of pipelines is that a pipeline must be directed and acyclic. It should also only have a single input. This means that the pipeline must have a starting point at which packets of data can be submitted and an end point at which processed packets of data appear. Therebetween, there must be no cycles, meaning that no packets of data travel endlessly around a loop between two or more nodes. In other words, there must be an order in which the nodes can be presented, wherein each node receives data from nodes earlier in the order and sends data to nodes later in the order. This is a topologically sorted order.

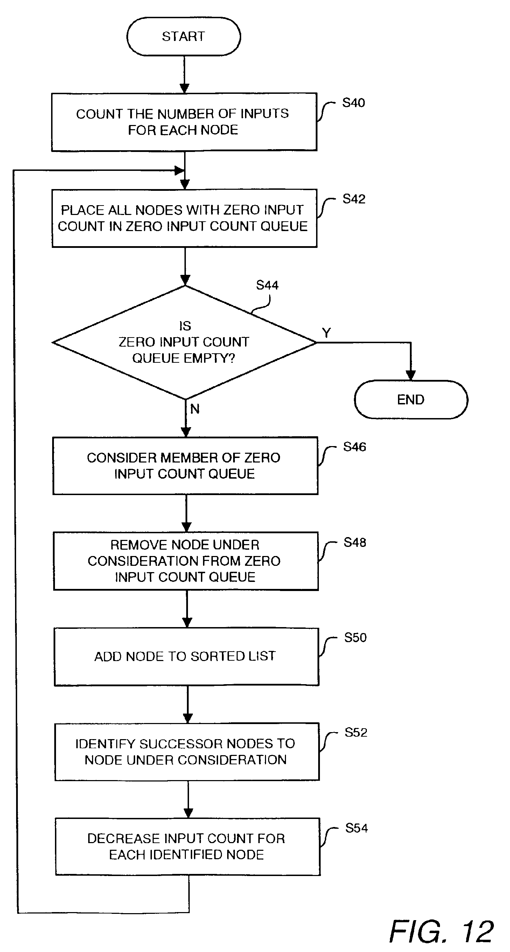

Figure 12 shows a method of operation of the topology sorter 44, which checks pipelines defined by the pipeline definition unit in accordance with instructions from the content software, and creates a topologically sorted order for execution of the nodes of the pipeline. The method of generation is based upon the description of topology sorting in "Data Structures, Algorithms and Software Principles in C" by Thomas Standish (Addison-Wesley, 1995, pages 419 to 422).

The topology sorter 44 receives the pipeline and in step S40, the number of inputs for each node is counted. The input counts for each node are recorded in memory. Then, in step S42, each node with zero input count is placed in a zero input count queue.

In step S44, a check is carried out of the zero input count queue to establish if it is empty. If it is empty, then the topology sorter routine of Figure 12 terminates. This means that sorting is completed. Alternatively, if the zero input count queue is not empty, the procedure continues in step S46, which considers a first member of the zero input count queue. This node is removed from the zero input count queue in step S48, and then is added to the sorted list which is to be created by the topology sorter in step S50.

Thereafter, the node which has been placed in the sorted list is considered further in step S52, and its successor nodes are identified. For each node identified as a successor node, the input count held in memory is decreased by one in step S54. Thereafter, the procedure returns to step S42 where all nodes now having zero input count are placed on the zero input count queue.

It will be seen that the step of decreasing the input count for each identified node in step S54 could create more than one node having zero input count. These nodes are queued and considered in turn when selected in step S46. Eventually, the pipeline is processed to the extent that the zero input count queue returns to an empty state, in which case the check made in step S44 results in the procedure ending.

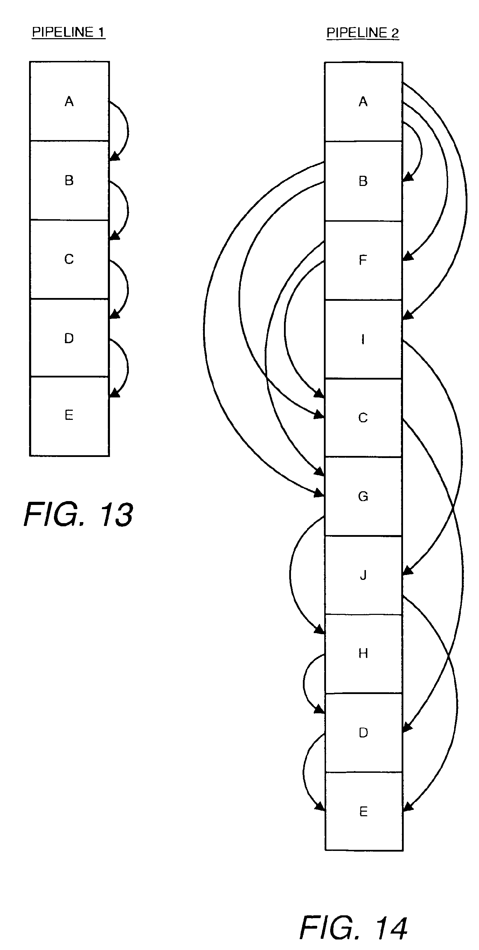

Figure 13 shows how the procedure illustrated in Figure 12 has been applied to the first pipeline illustrated in Figure 9. Moreover, the diagram shown in Figure 14 illustrates how the second pipeline as illustrated in Figure 10 is processed by the topology sorter of Figure 12. In both cases, it can be seen that by progressing down the list of nodes, each node under consideration can be processed because all nodes on whose outputs it depends for its inputs appear earlier in use.

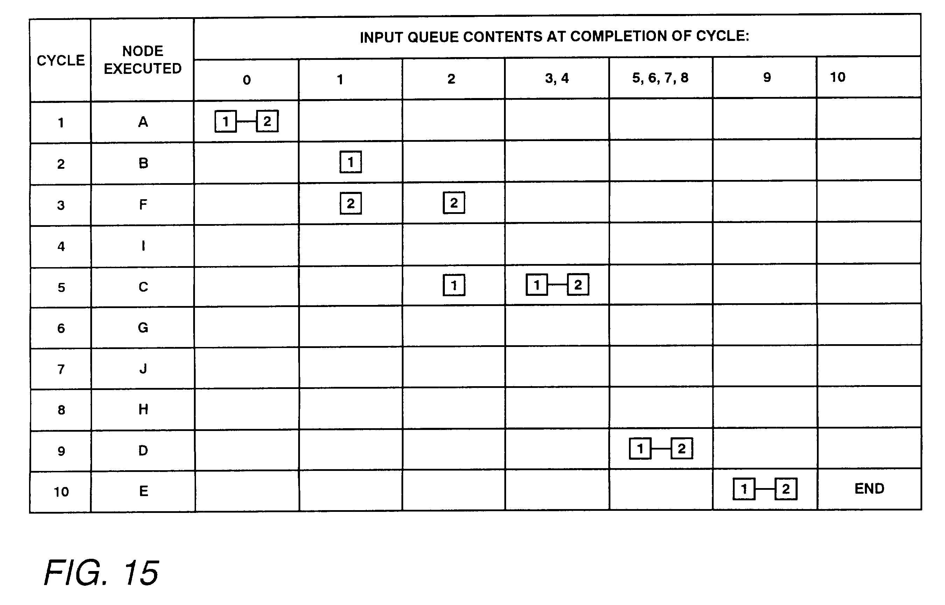

Figure 15 shows a table which illustrates a progression of two packets (labelled 1 and 2) submitted to the pipeline 202 illustrated in Figure 10 being processed in accordance with the procedure illustrated in Figure 7. This is a code directed procedure, in that it deals with each node in turn, identifying the contents of its input queue, and outputting processed packets of data to the appropriate successor input queues.

On the left hand side of Figure 15, a first column indicates the cycle of execution of the procedure of Figure 7. This number increases with every occasion that step S12 is performed. Therefore, in a first cycle of the procedure, the first node in the pipeline (as specified in step S10) is considered. Step S12 is performed, and it is found that packets 1 and 2 are on the input queue of node A. Node A is executed in step S14, which outputs packets 1 and 2 in step S16. Step S18 finds that the number of packets on the output queue is not too high, and so the packets are passed in step S22 to the destination input queue, which in this case is node B for packet 1 and node F for packet 2. The decision as to whether to dispatch a packet to node B, node F or node I is taken by node A, having regard to the nature of the data held in the packet. Step S24 finds that there are more nodes to consider, and these are considered in turn.

On the next cycle, node B is considered, because this is the next node in the topologically sorted order as illustrated in Figure 14. Packet 1 is stored on the input queue of node B at the end of the first cycle, and therefore at the beginning of the second cycle. During second cycle, packet 1 is processed through node B, and is sent to the input queue of node C. During the second cycle, no processing takes place at any other node, and so packet 2 remains on the input queue of node F.

During the third cycle, node F is processed. This node has packet 2 on its input queue at the end of the second cycle. Node F processes packet 2 and places that packet on the input queue of node C as well. As illustrated in Figure 15, this means that packets 1 and 2 are rejoined at the input queue of node C. This remains the case during the fourth cycle, because the fourth cycle involves processing of node I, whose input queue is empty.

Then, during the fifth cycle of the method illustrated in Figure 7, node C is processed, and packets 1 and 2 are sent to the input queue of node D. This remains the case through cycles 6, 7 and 8, which process nodes G, J and H respectively. Then, in the ninth cycle of the method illustrated in Figure 7, node D is processed, resulting in the sending of packets 1 and 2 to node E.

Finally, in the tenth cycle, node E is processed, and the procedure terminates.

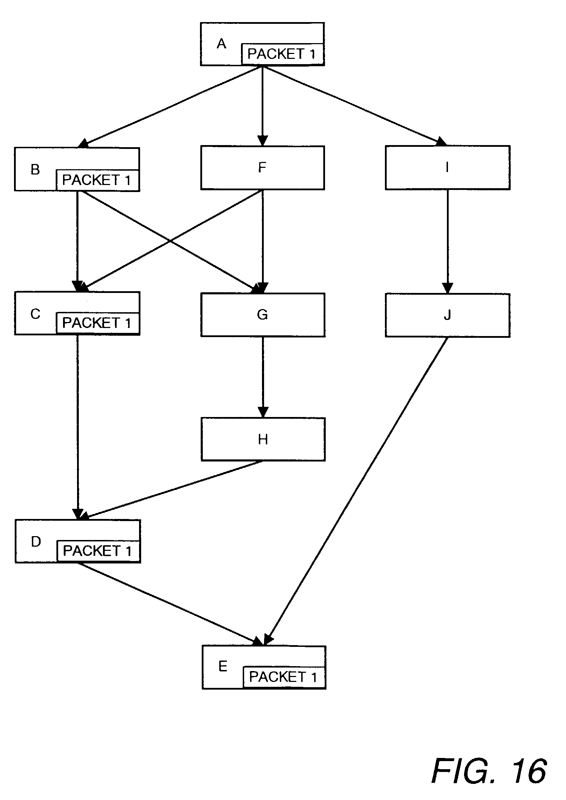

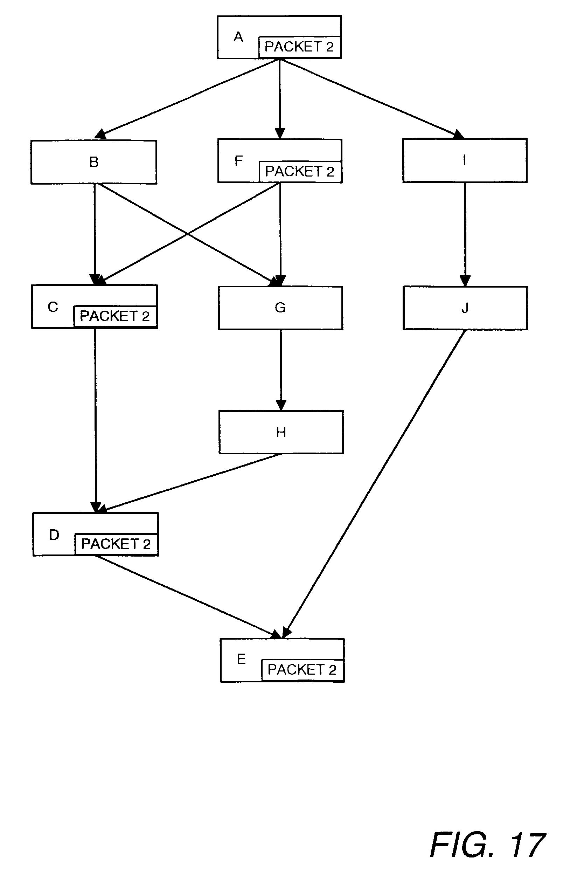

The foregoing method illustrates a code directed form of pipeline processing, in that it operates on the basis of processing each node in turn in the pipeline structure for all packets of data submitted to the pipeline at that time. An alternative method is illustrated in Figures 16 and 17, being a data directed dispatch method, in which packets of data are processed one at a time but are sent directly down the appropriate route in a pipeline.

The packets 1 and 2 illustrated in Figures 16 and 17 are sent through exactly the same route as is followed in Figure 15 with regard to the code directed dispatch method. In Figure 16, packet 1 is submitted to the pipeline, and nodes A, B, C, D and E are processed in turn with respect to packet 1. Then, packet 2 is submitted to the pipeline and nodes A, F, C, D and E are executed in turn with respect to packet 2. This method may be of value if a pipeline has many branches, in which case many nodes without packets on their input queues could be checked for nodes or their inputs unnecessarily in a code directed dispatch method. However, data directed dispatch may be less appropriate in cases of smaller and simpler pipelines, in which it may be efficient to process groups of packets of data at a time. Moreover, the selection of code directed dispatch as opposed to data directed dispatch depends on whether it is preferred to swap code or data more often into or out of the cache of the processor.

Further modifications and variations to the specific embodiment of the invention described above are envisaged. For example, whereas the system has been described with reference to geometry data being submitted to the graphics manager 34 with pipeline identification attributes contained in a material object, it is also possible that pipeline identification attributes could be contained in other objects of the geometry data. In particular, an object as a whole could contain such an attribute.

Further, the manner in which pipelines are defined by a user could be in the form of C style programming instructions, including functions exposed as an API of the graphics manager. Alternatively, a graphical user interface could be provided, which allows pipeline structures such as those illustrated in Figures 9 and 10 to be constructed as illustrated, using a pointing device such as a mouse.

Whereas the graphics manager development unit 34 is described in the present embodiment at being implemented in software, it could alternatively be provided as a hardware component in a computer.

The graphics manager development unit, whether provided in software of hardware, is capable of generating a computer program product containing instructions on the assembly of one or more graphics pipelines, associated with graphics data. The product can be placed on storage media such as the optical disk 20 or the magnetic disk 24 illustrated in Figure 1, carried on a signal such as generated by the modem 26 illustrated in Figure 1, or prestored in a ROM for incorporation into a computer apparatus.

Also, the product of the graphics manager development unit, as illustrated in Figure 4, could be incorporated into a hardware unit, or supplied to a port of a console. The product could be supplied as a ROM in the hardware unit, which would then configure the console to operate in the desired manner. The console could be provided with elements of the graphics manager 122 illustrated in Figure 4, as program instructions stored in ROM. Alternatively, the graphics manager 122 could be incorporated into each software product designed for use with the console.

Whereas Figure 4 shows the product containing a library of node definition units, in an alternative embodiment a library of pipeline definition units could be provided instead. These pipeline definition units would comprise instructions for the instancing of specific pipelines as required to handle received data containing pointers to those pipelines.

## Claims

1. Computer program development apparatus comprising a library of functional nodes, each node being suitable for inclusion in a pipeline for use in a graphical processing program, instruction receiving means for receiving pipeline configuration instructions and pipeline construction means operable to construct a pipeline definition in terms of nodes from said library in accordance with the received instructions, said pipeline defining a process for preparation of a graphical object for graphical display.

2. Apparatus in accordance with claim 1 including pipeline definition storage means for storing one or more pipeline definitions for use in a graphical processing program developed on said apparatus.

3. Apparatus in accordance with claim 2 wherein said pipeline definition storage means includes one or more predetermined pipeline definitions, for inclusion in a program developed on said apparatus.

4. Apparatus in accordance with any preceding claim wherein said instruction receiving means comprises a programming interface defining a plurality of programming instructions for inclusion in a computer program to be developed on said apparatus.

5. Apparatus in accordance with claim 4 comprising compiler means operable to convert a computer program developed on said apparatus into a processor executable form, said compiler means being operable, in response to a programming instruction of said programming interface for the definition of a pipeline including one or more nodes selected from said library, to include processor executable instructions for the definition of a pipeline in accordance with said instruction including processor executable instructions for said one or more selected nodes.

6. Apparatus in accordance with claim 5 wherein said compiler means includes sorting means responsive to identification of a pipeline definition to sort nodes included in said pipeline definition into an executable order.

7. Apparatus in accordance with claim 6 wherein said sorter means is operable to sort nodes into an executable order wherein nodes in said pipeline are arranged for sequential execution, such that the output from a node is passed in use to an input of a node later in said order or to the end of the pipeline, but not to a node earlier in said order.

8. Apparatus in accordance with claim 7 wherein said sorter means comprises error detection means operable to indicate an error if said nodes of said pipeline definition cannot be placed in an order for sequential execution.

9. Apparatus in accordance with any preceding claim and including a facility for developing a graphical processing program including more than one pipeline definitions, to process a graphical object including a pipeline identification tag, said program being operable in use to identify from said tag which if said pipelines defined by said definitions is to be used in processing said object and to pass said object to said pipeline.

10. Apparatus in accordance with any preceding claim including node receiving means for receiving additional nodes into said library.

11. Computer program development apparatus comprising a library of pipelines, each pipeline being for use in a graphical processing program and defining a process for preparation of a graphical object for graphical display, and instruction receiving means for receiving pipeline selection instructions for inclusion of a selected pipeline in a graphical processing program.

12. Computer graphics apparatus comprising a library of functional nodes, pipeline definition data defining a graphical object processing pipeline in terms of nodes of said library for processing graphical data in preparation for generation of a graphical display, and processing means for constructing a pipeline including nodes from said library in accordance with said pipeline definition data and for processing items of graphical data through said pipeline.

13. Apparatus in accordance with claim 12 wherein said pipeline definition means comprises a plurality of pipeline definitions each defining a pipeline in terms of nodes of said library, and wherein said processing means comprises graphics data management means operable to identify, for each item of graphical data, which pipeline defined in said pipeline definition means is to be used in the processing of said item, and for processing said item accordingly.

14. Computer graphics apparatus comprising pipeline definition means storing a plurality of graphics pipeline definitions defining pipelines for the processing of graphical data, graphics data management means for identifying, for an item of graphics data to be processed, which of said pipelines is to be used, and graphics processing means for processing said item of data through said identified pipeline in preparation for graphical presentation thereof.

15. A method of generating a software development toolkit comprising:
providing a library of functional nodes for processing graphical data and for inclusion in a graphical pipeline;
providing an instruction interface for receiving pipeline definition instructions, said instructions in use defining a pipeline in terms of nodes of said library; and
providing a facility for incorporation of a definition of pipeline and the nodes defined therein into a computer program product.

16. A method of generating a software development toolkit comprising:
providing a library of graphical pipelines for use in a graphical processing program and defining a process for preparation of a graphical object for graphical display;
providing an instruction interface for receiving selection instructions, said instructions in use selecting a pipeline from said library; and
providing a facility for incorporation of a pipeline into a computer program product.

17. A method of generating a computer program product comprising:
constructing a graphics pipeline definition from a library of nodes in accordance with received instructions;
selecting from said library of nodes, nodes for inclusion in said pipeline; and
combining said pipeline definition and said nodes in said product.

18. A method in accordance with claim 17 wherein said step of combining includes generating a set of processor executable instructions representing processing of said pipeline.

19. A method in accordance with claim 17 wherein said step of combining includes generating a set of processor executable instructions which, in use, will cause a processor to construct a set of processor executable instructions representing processing of said pipeline from said pipeline definition and said nodes.

20. A method of generating a computer program product comprising:
selecting a graphics pipeline for inclusion in said product from a library of pipelines in accordance with received instructions; and
incorporating said pipeline into said product.

21. A method of generating data for a graphical image from data defining three dimensional objects to be represented graphically, comprising:
identifying, for each object, a graphics processing pipeline to be used from a plurality of prestored pipeline definitions in preparing said object for graphical representation;
constructing said identified graphics processing pipeline in accordance with stored instructions; and
processing said object through said pipeline.

22. A method in accordance with claim 21 wherein said constructing step comprises constructing said identified graphics pipeline by including selected ones of a stored plurality of functional nodes therein, in accordance with said stored instructions.

23. A method of generating data for a graphical image from data defining three dimensional objects to be represented graphically, comprising:
identifying, for each object, a graphics processing pipeline to be used in preparing said object for graphical representation from a plurality of predetermined pipeline definitions; and
processing said object through said pipeline.

24. A computer program product comprising processor executable instructions which, when loaded onto a computer, cause said computer to be configured as apparatus in accordance with any of claims 1 to 14.

25. A computer program product comprising processor executable instructions operable to configure a computer to perform a method in accordance with any of claims 15 to 23.

26. A computer program product comprising data defining three dimensional objects to be represented graphically, a plurality of graphical pipelines for preparation of data defining three dimensional objects for graphical representation, and a computer executable instruction operable to cause a computer to select, for each object to be represented, one of said pipelines to be used to prepare said data defining said object for graphical representation.

27. A computer program product comprising data defining three dimensional objects to be represented graphically, a plurality of functional nodes each being suitable for inclusion in a graphical pipeline for preparation of data defining three dimensional objects for graphical representation, and a computer executable instruction operable to cause a computer to select nodes from said plurality, to construct a pipeline from said nodes and to process said data through said pipeline.

28. A computer program product for use in a computer provided with means for processing three dimensional data for graphical representation and a plurality of functional nodes each being suitable for inclusion in a graphical pipeline for preparation of data defining three dimensional objects for graphical representation, said computer program product comprising data defining three dimensional objects to be represented graphically, and a processor executable instruction operable to configure the computer, to construct a pipeline from selected ones of said nodes and to process said data through said constructed pipeline.

29. A computer program product comprising a plurality of functional nodes each being suitable for inclusion in a graphical pipeline for preparation of data defining three dimensional objects for graphical representation, and processor executable instructions operable to configure a computer to select one or more of said nodes and to construct a pipeline therefrom, said pipeline being operable to process three dimensional object data in preparation for representation thereof graphically.

30. A computer program product comprising data defining three dimensional objects to be represented graphically, a plurality of graphical pipelines for preparation of data defining three dimensional objects for graphical representation, and a computer executable instruction operable to cause a computer to select a pipeline from said plurality, and to process said data through said pipeline.

31. A computer program product for use in a computer provided with means for processing three dimensional data for graphical representation and a plurality of graphical pipelines for preparation of data defining three dimensional objects for graphical representation, said computer program product comprising data defining three dimensional objects to be represented graphically, and a processor executable instruction operable to configure the computer, to select a pipeline from said plurality and to process said data through said pipeline.

32. A computer program product comprising a plurality of graphical pipelines for preparation of data defining three dimensional objects for graphical representation, and processor executable instructions operable to configure a computer to select one of said pipelines, said pipeline being operable to process three dimensional object data in preparation for representation thereof graphically.

33. A storage medium storing a program product in accordance with any of claims 24 to 32.

34. A signal carrying a program product in accordance with any of claims 24 to 32.
